# EUROPÄISCHE PATENTSCHRIFT

(11) **EP 2 598 762 B1**
(45) Veröffentlichungstag und Bekanntmachung des Hinweises auf die Patenterteilung: **20.01.2016**
(21) Anmeldenummer: 11735652.7
(22) Anmeldetag: 26.07.2011
(51) Int. Cl.: F16C 19/38, F16C 19/50, F16C 33/36, F16C 19/56, F16C 33/60, F03D 11/00

(54) **LAGERANORDNUNG UND GETRIEBE**
BEARING ARRANGEMENT AND GEARBOX
ENSEMBLE PALIER ET TRANSMISSION

(30) Priorität: 30.07.2010 DE 102010038708
(43) Veröffentlichungstag der Anmeldung: 05.06.2013
(73) Patentinhaber: Aktiebolaget SKF, 415 50 Göteborg (SE)
(72) Erfinder: BUCH, Stephan, 97422 Schweinfurt (DE); PAMPEL, Stefan, 97437 Haßfurt (DE)
(74) Vertreter: Schonecke, Mitja
(86) Internationale Anmeldenummer: PCT/EP2011/062771
(87) Internationale Veröffentlichungsnummer: WO 2012/013642

(56) Entgegenhaltungen:
- WO-A1-2009/065192
- DE-A1-102005 022 205
- JP-A- 2003 184 885
- JP-A- 2005 331 054
- US-A- 2 130 258
- US-A1- 2007 039 187

## Beschreibung

Die vorliegende Erfindung betrifft eine Lageranordnung und ein Getriebe.

In Getrieben, insbesondere von Windenergieanlagen, werden zur Lagerung der rotierenden Bauteile häufig Kegelrollenlager eingesetzt. Da diese Getriebe und ihre rotierenden Bauteile ständig wechselnden Belastungen ausgesetzt sind, bieten Kegelrollenlager hier besondere Vorteile, die unter anderem darin bestehen, dass Lagerungen mit Kegelrollenlagern spielfrei eingestellt und Lasten in radialer und axialer Richtung aufgenommen werden können. Bekannt sind beispielsweise Lagerungen mit zwei Reihen von Kegelrollen, die in der so genannten X- oder O-Anordnung angeordnet sein können. US 2 130 258 A beschreibt ein Kegelrollenlager gemäß dem Oberbegriff des Hauptanspruchs 1.

Es ist Aufgabe der vorliegenden Erfindung eine Lageranordnung und ein Getriebe anzugeben, die bei hoher Tragzahl vergleichsweise einfach und kostengünstig herzustellen sind.

Diese Aufgabe wird durch eine Lageranordnung mit den Merkmalen des Hauptanspruchs und ein Getriebe mit den Merkmalen des nebengeordneten Anspruchs gelöst. Vorteilhafte Ausgestaltungen sind Gegenstand der abhängigen Unteransprüche.

Gemäß Hauptanspruch 1 wird eine Lageranordnung angegeben, aufweisend folgende Merkmale:
- Laufbahnelemente mit Laufbahnen, auf denen Wälzkörper abrollen,
- kegelstumpfartige Wälzkörper, die zwischen den Laufbahnelementen angeordnet sind,
- die Wälzkörper sind in wenigstens vier axial beabstandeten Reihen angeordnet,
- die Wälzkörper jeder Reihe rollen auf einem einzelnen Laufbahnelement ab und
- die Wälzkörper aller Reihen rollen auf einem gemeinsamen Laufbahnelement ab.

Erfindungsgemäß ist das gemeinsame Laufbahnelement radial außen liegend angeordnet (also als Außenring ausgeführt), während die einzelnen Laufbahnelemente radial innen liegend angeordnet sind (also als Innenringe).

Durch die Vorsehung von wenigstens vier Reihen von Wälzkörpern lassen sich mit der erfindungsgemäßen Lageranordnung hohe Lasten tragen. Durch den Einsatz von mehr als zwei Reihen der Wälzkörper lassen sich die Wälzkörper im Vergleich zu Lageranordnungen mit zwei Reihen bei gleicher Tragzahl mit kleinerem Durchmesser fertigen, was die Herstellungskosten reduziert und ungünstige Verhältnisse vermeidet, wie sie bei der Verwendung von sehr langen Wälzkörpern in Lageranordnungen mit nur zwei Reihen vorlägen.

Durch die Ausbildung wenigstens eines gemeinsamen Laufbahnelements für die Reihen der Wälzkörper lässt sich die Gestaltung im Vergleich zu bekannten Lageranordnungen deutlich vereinfachen. Da jeder Reihe von Wälzkörpern zudem ein einzelnes Laufbahnelement zugeordnet ist, dass dem gemeinsamen Laufbahnelement insbesondere gegenüber liegt, lassen sich die Wälzkörper und einzelnen Laufbahnelemente aus Standardkomponenten, die auch für Kegelrollenlager mit nur einer Reihe von Wälzkörpern verwendet werden, aufbauten, so dass keine speziellen Werkzeuge oder Fertigungsschritte erforderlich sind. Lediglich das gemeinsame Laufbahnelement muss gesondert gefertigt werden. Insgesamt ist der Fertigungsaufwand also verringert.

Zudem ist die Montage vereinfacht, da die Wälzkörper, ggf. mit einem Käfig, zunächst komplett auf den einzelnen Laufbahnelementen montiert werden können und dann axial nacheinander in das gemeinsame Laufbahnelement eingeführt werden, um die Lageranordnung zu komplettieren.

In einer bevorzugten Ausführungsform der Erfindung sind sich bezüglich der axialen Mitte der Lageranordnung gegenüberliegende Reihen der Wälzkörper in O-Anordnung angeordnet. Die Kegelrollen sind folglich alle derart angeordnet, dass sie sich zur axialen Mitte der Lageranordnung hin verjüngen. Dabei kann erfindungsgemäß der Außenring das gemeinsame Laufbahnelement sein, während jede Wälzkörperreihe einen gesonderten Innenring aufweist. Durch die Ausbildung in O-Anordnung ist es auf einfache Weise möglich, der Lageranordnung eine definierte Vorspannung zu geben, die für den Betrieb vorteilhaft ist. Ebenfalls ist eine einfache Montage gewährleistet, da sich die einzelnen Innenringe mit bereits montierten Wälzkörpern und den Käfigen auf einfache Weise in den sich nach außen hin weiter öffnenden Außenring schieben lassen. Die Vorspannung lässt sich einstellen, indem die Innenringe definiert gegeneinander verspannt werden.

In einer bevorzugten Ausführungsform der Erfindung weist das gemeinsame Laufbähnelement vier axial beabstandete Laufbahnen auf. Hierdurch lassen sich die einzelnen Laufbahnen des gemeinsamen Laufbahnelements auf die jeweils auf der Laufbahn abrollende Wälzkörperreihe abstimmen und an die Anforderungen der Lageranordnung im jeweiligen Einsatzzweck anpassen.

In einer bevorzugten Ausführungsform der Erfindung rollen jeweils zwei Reihen der Wälzkörper auf einer gemeinsamen Laufbahn des gemeinsamen Laufbahnelements ab. Dabei lässt sich die gemeinsame Laufbahn für wenigstens zwei Reihen der Wälzkörper in einem einzelnen Bearbeitungsschritt durchgängig erzeugen. Hierfür ist es zusätzlich erforderlich, dass die zwei Reihen der darauf abrollenden Wälzkörper bezüglich ihrer äußeren Kontur fluchtend parallel zur Laufbahn angeordnet sind. Die entsprechenden gemeinschaftlich auf der Laufbahn abrollenden Wälzkörper können beispielsweise verschiedene Kegelwinkel aufweisen.

In einer vorteilhaften Ausgestaltung der Erfindung weisen die Reihen der Wälzkörper wenigstens zwei unterschiedliche Kegelwinkel auf. Die Laufbahnen der Laufbahnelemente weisen entsprechende Laufbahnwinkel auf. Die entsprechende Lageranordnung weist maximale Flexibilität für verschiedene Einsatzzwecke auf. So können die Kegelwinkel und Laufbahnwinkel der Wälzkörper und Laufbahnen der Laufbahnelemente entsprechend dem Einsatzzweck ausgewählt werden und entsprechend eine auf den Einsatzzweck zugeschnittene Lageranordnung geschaffen werden.

In einer vorteilhaften Ausführungsform der Erfindung sind wenigstens zwischen zwei der einzelnen Laufbahnelemente Distanzelemente angeordnet. Dies hat den Vorteil, dass sich zur Aufbringung einer Vorspannung auf die kegelstumpfartigen Wälzkörper Toleranzen bei der Fertigung der einzelnen Laufbahnelemente durch die Distanzelemente ausgleichen lassen.

In einer alternativen Ausführungsform der Erfindung sind wenigstens zwei der einzelnen Laufbahnelemente axial nicht beabstandet. Hier ist zwar der Fertigungsaufwand bezüglich der einzelnen Laufbahnelemente, die axial nicht beabstandet sind, im Vergleich zur vorherigen Ausführungsform erhöht, dafür sind jedoch zur Gestaltung der Lageranordnung weniger einzelne Bauelemente erforderlich.

In einer vorteilhaften Ausführungsform der Erfindung sind die Wälzkörper der bezüglich der axialen Richtung innen liegenden Rollen kleiner ausgeführt als die Wälzkörper der außen liegenden Reihen. Alternativ bzw. zusätzlich ist der die Wälzkörper einhüllende größte Kreis der bezüglich der axialen Richtung innen liegenden Reihen kleiner ausgeführt als der die Wälzkörper einhüllende kleinste Kreis der außen liegenden Reihen. Daraus resultiert eine erleichterte Montage. Dies hat zudem bei Lageranordnungen Vorteile, bei denen das gemeinsame Laufbahnelement eine weitere Funktion zur Verfügung stellen muss und dadurch eine besonders erhöhte Stabilität aufweisen muss. Dies ist insbesondere der Fall, wenn die Laufbahnen beispielsweise in ein Zahnrad eines Getriebes oder direkt in ein Gehäusebauteil integriert werden müssen. Hier ist es besonders vorteilhaft, ein gemeinschaftliches Laufbahnelement auszubilden, um die Stabilität zu erhöhen. Durch die innen liegenden kleiner ausgeführten Reihen von Wälzkörpern lässt sich entsprechend der Bauraum optimal ausnutzen und die Materialstärke des gemeinschaftlichen Laufbahnelements in diesem Bereich im Vergleich zu den außen liegenden Wälzkörperreihen deutlich erhöhen. Insgesamt erhält man somit eine Lageranordnung mit einem stabilen gemeinsamen Laufbahnelement bei gleichzeitig maximal möglicher Ausnutzung des Bauraums zur Optimierung der Tragzahl für den jeweiligen Einsatzzweck.

In einer bevorzugten Ausführungsform der Erfindung weisen die Reihen der Wälzkörper wenigstens teilweise verschiedene Kegelwinkel oder die Außenlaufbahnen verschiedene Druckwinkel auf. Als Druckwinkel soll hier der von der Außenlaufbahn und der Symmetrieachse eingeschlossene Winkel verstanden werden. So ist es bevorzugt möglich, auf einer axialen Seite der Lageranordnung jeweils zwei Reihen mit spitzerem Kegelwinkel anzuordnen, als auf der gegenüberliegenden Seite. Dies führt zu einer Verteilung der axialen und radialen Lasten auf die jeweilige Seite des Wälzlagers. Dabei nimmt die Seite mit Wälzkörpern geringeren Kegelwinkels einen höheren Anteil an Radiallasten auf, während die Seite mit höherem Winkel einen höheren Anteil an axialen Kräften aufnimmt.

Ein Ausführungsbeispiel der Erfindung umfasst ebenfalls ein Getriebe, aufweisend wenigstens eine Lageranordnung nach einem der Ansprüche 1 bis 9. Die erfmdungsgemäße Lageranordnung und ihre Ausführungsformen lassen sich besonders vorteilhaft beispielsweise in Planetengetrieben von Windkraftanlagen einsetzen, da hier besonders hohe Tragzahlen bei gleichzeitig begrenztem Bauraum erforderlich sind.

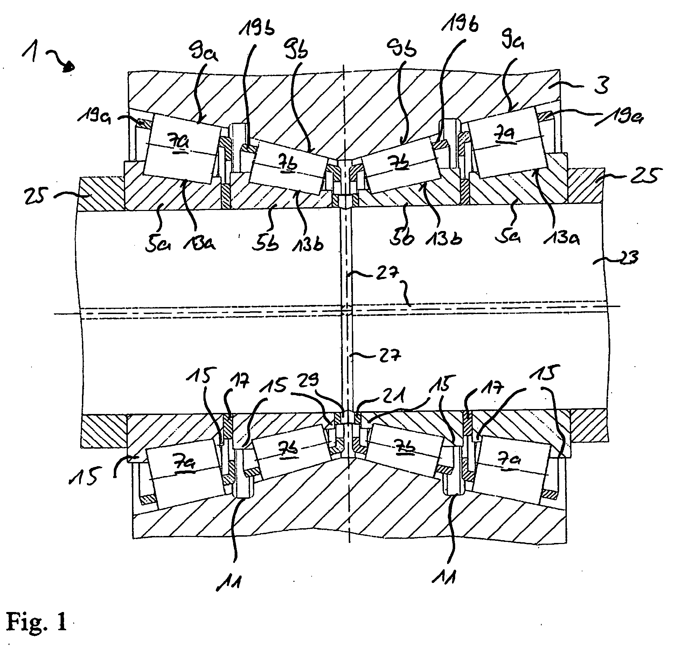

Weitere Vorteile und Ausgestaltungen der Erfindung ergeben sich aus den nachfolgend erläuterten Ausführungsbeispielen im Zusammenhang mit den beigefügten Figuren 1 bis 5, die verschiedene Ausführungsformen der Erfindung zeigen.

In der Figur 1 ist eine Kegelrollenlageranordnung 1 dargestellt. Sie umfasst einen Außenring 3, sowie vier Innenringe 5a und 5b. Zwischen den Innenringen 5a und dem Außenring 3 sind Kegelrollen 7a angeordnet, während zwischen den Innenringen 5b und dem Außenring 3 Kegelrollen 7b angeordnet sind. Der Außenring 3 weist separate axial beabstandete Laufbahnen 9a und 9b zum Abrollen der Wälzkörper 7a bzw. 7b auf. Zwischen den Laufbahnen 9a und 9b ist eine radial umlaufende Nut 11 im Außenring 3 eingebracht. Die Laufbahnen 9a und 9b sind entsprechend dem Kegelwinkel der Kegelrollen 7a bzw. 7b ausgebildet und können unterschiedlich oder gleich groß sein. Der Innenring 5a weist zum Abrollen der Kegelrollen 7a eine Laufbahn 13a auf. Zur Führung der Kegelrollen 7a sind Borde 15 vorgesehen. Der Innenring 5b weist eine Laufbahn 13b zum Abrollen der Kegelrollen 7b auf, sowie Borde 15 zum Führen der Kegelrollen 7b. Zwischen dem Innenring 5a und dem Innenring 5b ist eine Distanzscheibe 17 angeordnet, die die Innenringe 5a und 5b axial beabstandet. Die Kegelrollen 7a werden durch einen Käfig 19a, die Kegelrollen 7b durch einen Käfig 19b geführt. Bezüglich der axial mittig angeordneten Symmetrielinie ist die Lageranordnung symmetrisch aufgebaut. Zwischen den beiden innen liegenden Innenringen 5b ist ein Distanzring 21 angeordnet. Die Innenringe 5a und 5b sind auf einem Achsstummel 23 angeordnet, auf dem der Außenring über die Kegelrollen 7a und 7b drehbar gelagert ist. Zur Aufbringung einer definierten Vorspannung auf die Kegelrollen 7a und 7b sind auf dem Achsstummel Spannelemente 25 angeordnet, die eine axial wirkende Kraft auf die Innenringe 5a und 5b und über die zwischen den Innenringen 5a und 5b liegenden Distanzringe 17 auch auf die Innenringe 5b ausüben können. Somit lässt sich durch die Spannelemente 25 eine Vorspannung innerhalb der Lageranordnung 1 erzielen, die durch die Breite der Distanzringe 17 und 21 definiert wird.

Gegenüber bekannten Lageranordnungen lässt sich die Lageranordnung 1 bezüglich der Kegelrollen 7a und 7b sowie der Innenringe 5a und 5b aus Standardkomponenten aufbauen, wie sie auch in Kegelrollenlageranordnungen mit nur einer oder zwei Reihen von Kegehollen zum Einsatz kommen. Lediglich der Außenring 3 ist ein speziell für die Lageranordnung 1 herzustellendes Bauelement. Der Fertigungsaufwand zur Herstellung der Kegelrollenlageranordnung 1 ist im Vergleich zu bekannten Lageranordnungen folglich reduziert.

Bezüglich der axialen Dimension des Außenrings 3 ist mit den vier Reihen von Kegelrollen der zur Verfügung stehende Bauraum zur Erreichung der maximalen Tragzahl bestmöglich ausgenutzt. Zudem ist der Außenring 3 im Bereich der Kegelrollen 7b in radialer Richtung besonders groß dimensioniert, so dass eine bestmögliche Steifigkeit des Außenrings 3 ermöglicht ist. Dies wäre beispielsweise nicht der Fall, wenn die Kegelrollen 7b gleich groß ausgeführt wären wie die Kegelrollen 7a. Durch die kleinere Ausführung der innen liegenden Kegelrollen 7b im Vergleich zu den außen liegenden Kegelrollen 7a lässt sich die Materialstärke des Außenrings 3 axial innen erhöhen, was die Haltbarkeit der Kegelrollenlageranordnung 1 erhöht. Dies ist insbesondere dann von Vorteil, wenn der Außenring 3 eine weitere Funktionalität aufweisen muss, wie beispielsweise eine integrierte Verzahnung, also beispielsweise ein Planetenrad eines Getriebes darstellt. Anders betrachtet können die Laufbahnen 9a und 9b als in ein Zahnrad eingearbeitet angesehen werden.

Der Achsstummel 23 weist einen Kanal 27 auf, über den Schmierstoff führbar ist. Der Kanal endet an einer Öffnung 29 des Distanzrings 21, so dass Schmierstoff durch den Achsstummel 23 zwischen die Kegelrollen 7b bringbar ist. Somit lässt sich die Kegelrollenlageranordnung 1 von innen heraus mit frischem Schmierstoff versorgen.

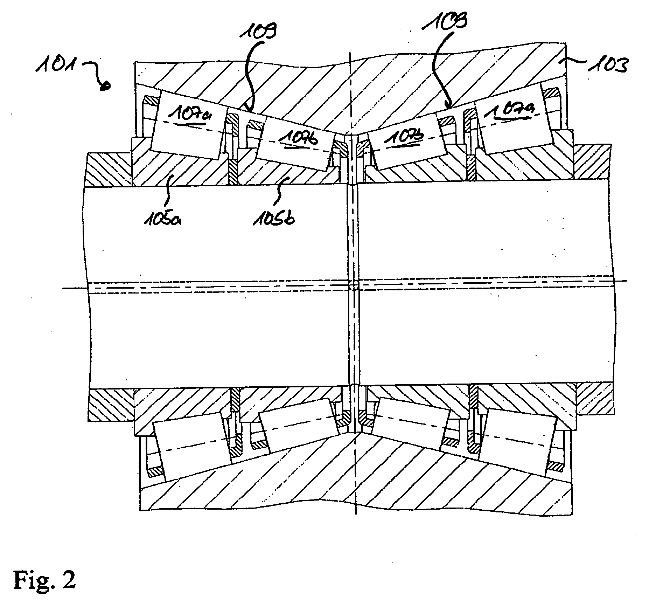

In der Figur 2 ist als ein weiteres Ausführungsbeispiel der Erfindung eine Kegellageranordnung 101 dargestellt. Sie ist im Wesentlichen analog zur Kegelrollenlageranordnung 1 der Figur 1 aufgebaut. Lediglich der Außenring 103 ist bezüglich der Laufbahnen anders gestaltet. Im Vergleich zum Ausführungsbeispiel der Figur 1 weist der Außenring 103 lediglich zwei Laufbahnen 109 auf, auf denen jeweils zwei Reihen der Wälzkörper der Kegelrollen 107a und 107b abrollen. Die Kegelrollen 107a und 107b sind folglich derart angeordnet, dass sie bezüglich ihrer radial außen liegenden Mantelfläche fluchten und an der jeweiligen Laufbahn 109 des Außenrings anliegen. Bezüglich der entsprechenden Gestaltung der Innenringe 105a und 105b ist die Lageranordnung 101 analog zur Lageranordnung 1 der Figur 1 aufgebaut. Sie weist insbesondere die gleiche Funktionalität auf. Hier bietet sich insbesondere der Vorteil, dass die Laufbahnen 109 in einem durchgehenden Bearbeitungsschritt des Außenrings 103 hergestellt werden können.

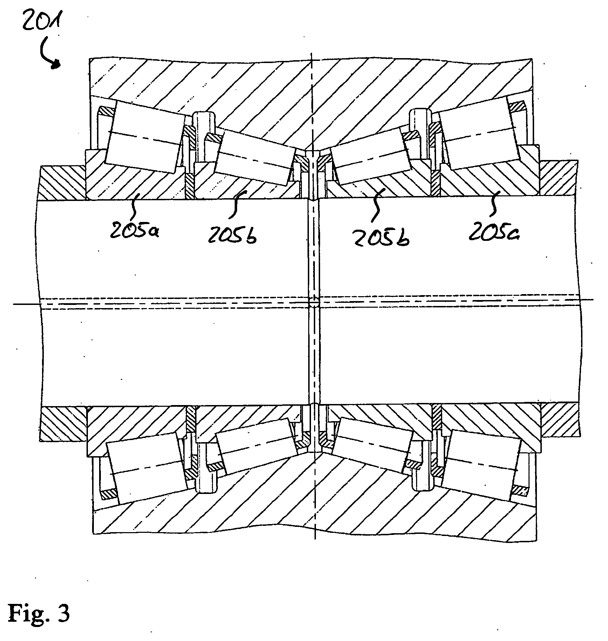

In der Figur 3 ist als ein weiteres Ausführungsbeispiel der Erfindung eine Kegelrollenlageranordnung 201 dargestellt. Sie ist weitestgehend analog der Kegelrollenlageranordnung 1 der Figur 1 ausgebildet. Im Unterschied zur letztgenannten Ausführungsform der Erfindung ist zwischen den Innenringen 205b keine Distanzscheibe angeordnet. Folglich sind die Innenringe 205b bezüglich ihrer axialen Toleranzen mit weniger Genauigkeit fertigbar als im Ausführungsbeispiel der Figur 1.

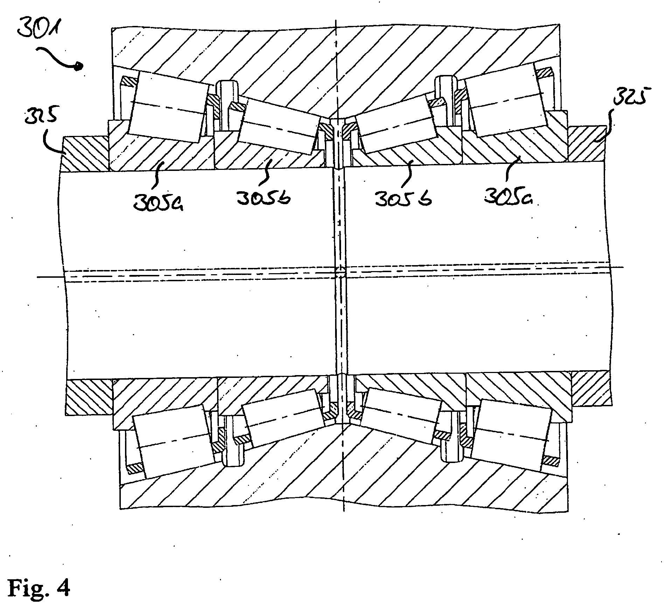

In der Figur 4 ist als ein weiteres Ausführungsbeispiel der Erfindung eine Kegelrollenlageranordnung 301 dargestellt. Sie ist wiederum bezüglich der Gestaltung weitestgehend mit den Ausführungen der Figuren 1 und 3 identisch. Im Unterschied zu den letztgenannten Ausführungen entfallen hier auch die Distanzscheiben zwischen den Innenringen 305a und 305b, so dass diese axial unmittelbar benachbart angeordnet sind. Folglich erfordert es für die Herstellung der Innenringe 305a und 305b eine erhöhte Präzision, damit die Vorspannung über die Spannelemente 325 entsprechend einstellbar ist. Durch den Entfall der Distanzscheiben ist jedoch die Montage der Kegelrollenlager 301 im Vergleich zu den anderen Ausführungsbeispielen erleichtert. Auch sind weniger Bauteile erforderlich.

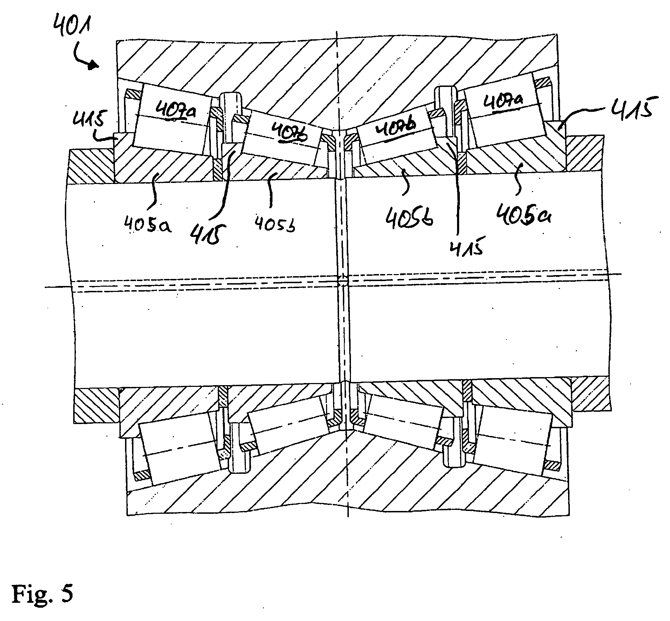

In der Figur 5 ist als ein weiteres Ausführungsbeispiel der Erfindung eine Kegelrollenlageranordnung 401 dargestellt. Im Unterschied zu den vorherigen Ausführungsbeispielen weisen die Innenringe 405a und 405b nur jeweils einen Bord 415 zur Führung der Kegelrollen 407a und 407b auf, so dass die Herstellung der Innenringe vereinfacht wird und zusätzlicher Raum für längere Wälzkörper mit erhöhter Tragfähigkeit geschaffen wird.

Die verschiedenen Varianten der Innenringe und Außenringe, sowie der Distanzscheiben und der Führungsborde der verschiedenen Ausführungsbeispiele der Erfindung lassen sich untereinander auch zu alternativen Ausführungsbeispielen, die hier nicht näher im Einzelnen erläutert sind, kombinieren.

Gegenüber bekannten Ausführungen mit lediglich 2 Kegelrollenlagern ergibt sich durch die Vorsehung zwei weiterer Kegelrollenlager zwischen den beiden äußeren Kegelrollenlagern eine bessere Ausnutzung des zur Verfügung stehenden Bauraums. Gleichzeitig lassen sich im Vergleich kürzere Kegelrollen verwenden, die im Vergleich zu längeren Kegelrollen ein kinematisch günstigeres Betriebsverhalten aufweisen. Alternativ lässt sich bei konstant zu haltender Tragfähigkeit die Lageranordnung mit kleineren Kegelrollen ausführen. Gegenüber einer alternativen bekannten Ausführung mit Zylinderrollenlagern lässt sich durch den Einsatz von Kegelrollenlagern eine erhöhte Kippsteifigkeit erzielen.

Zur Montage der dargestellten Lageranordnungen gemäß den Figuren ist es zunächst erforderlich, die jeweiligen Kegelrollen auf dem jeweiligen Innenring vorzumontieren und mit den jeweiligen Käfigen zu versehen. Bevorzugt liegt der Käfig dabei außerhalb des Rollenteilkreises, so dass eine hohe Anzahl der jeweiligen Wälzkörper verwendbar ist und die Tragzahl der Lageranordnung erhöht ist. Aufgrund der gewählten O-Anordnung der Kegelrollen ist es möglich, die mit den Wälzkörpern versehenen Innenringe axial von außen in den Außenring zu schieben und so zu montieren. Aufgrund der durchgehenden Laufbahnen des Außenrings ist dies auf einfache Weise möglich.

Bevorzugt lassen sich die Ausführungsformen der Erfindung in Getrieben von Windenergieanlagen einsetzen. In diesem Fall könnte beispielsweise der Außenring der jeweiligen Lageranordnung Bestandteil eines Planetenrades sein, also an seiner radialen Außenfläche eine Verzahnung aufweisen. Alternativ lässt sich der jeweilige Außenring auch in ein hohles Zahnrad einlegen und so zum Bestandteil des jeweiligen Planetenrades machen. Die Innenringe sitzen entsprechend auf einem Bolzen zur Halterung des Planetenrades auf. Durch die Schmiernutsysteme werden die Lageranordnungen mit Schmierstoff aus dem Planetengetriebe versorgt.

In einer alternativen Ausführungsform der Erfindung ist es möglich, die Kegelwinkel bzw. die Druckwinkel der Kegelrollen auf den beiden axialen Seiten der Lageranordnung unterschiedlich zu wählen. So könnten beispielsweise die zwei Reihen von Kegelrollen der linken Seite flacher angestellt sein als die der rechten Seite, wodurch sich eine angestrebte Verteilung der axialen und radialen Lasten auf die verschiedenen Hälften der Lageranordnung ergeben würde. Ebenfalls können unterschiedliche Druckwinkel, also nominal unterschiedliche Winkel der Außenlaufbahn auf beiden Seiten der Lageranordnung gewählt werden.

### Bezugszeichenliste

- 1: Kegelrollenlageranordnung
- 3: Außenring
- 5a, 5b: Innenringe
- 7a, 7b: Kegelrollen
- 9a, 9b: Laufbahnen
- 11: Nut
- 13a, 13b: Laufbahnen
- 15: Bord
- 17: Distanzscheibe
- 19a, 19b: Käfig
- 21: Distanzring
- 23: Achsstummel
- 25: Spannelemente
- 27: Kanal
- 29: Öffnung

- 101: Kegelrollenlageranordnung
- 103: Außenring
- 105a, 105b: Innenringe
- 107a, 107b: Kegelrollen
- 109: Laufbahnen

- 201: Kegelrollenlageranordnung
- 205a, 205b: Innenringe

- 301: Kegelrollenlageranordnung
- 305a, 305b: Innenringe
- 325: Spannelemente

- 401: Kegelrollenlageranordnung
- 405a, 405b: Innenringe
- 407a, 407b: Kegelrollen
- 415: Bord

## Patentansprüche

1. Lageranordnung, aufweisend folgende Merkmale:
- Laufbahnelemente (5a, 5b, 3) mit Laufbahnen (13a, 13b, 9a, 9b), auf denen Wälzkörper (7a, 7b) abrollen,
- kegelstumpfartige Wälzkörper (7a, 7b), die zwischen den Laufbahnelementen (5a, 5b, 3) angeordnet sind,
- die Wälzkörper (7a, 7b) sind in wenigstens vier axial beabstandeten Reihen angeordnet,
- die Wälzkörper (7a, 7b) jeder Reihe rollen auf einem einzelnen Laufbahnelement (5a, 5b) ab und
- die Wälzkörper (7a, 7b) aller Reihen rollen auf einem gemeinsamen Laufbahnelement (3) ab,
**dadurch gekennzeichnet,**
**dass** das gemeinsame Laufbahnelement (3) radial außen liegend angeordnet ist und als Außenring ausgebildet ist und die einzelnen Laufbahnelemente (5a, 5b) radial innen liegend angeordnet sind und als Innenringe ausgebildet sind.

2. Lageranordnung nach Anspruch 1, wobei das gemeinsame Laufbahnelement (3) vier axial beabstandete Laufbahnen (9a, 9b) aufweist.

3. Lageranordnung nach Anspruch 1, wobei jeweils zwei Reihen der Wälzkörper (107a, 107b) auf einer gemeinsamen Laufbahn (109) des gemeinsamen Laufbahnelements (103) abrollen.

4. Lageranordnung nach einem der Ansprüche 1, 2 oder 3, wobei die Reihen der Wälzkörper wenigstens zwei unterschiedliche Kegelwinkel aufweisen und die Laufbahnen der Laufbahnelemente entsprechende Laufbahnwinkel aufweisen.

5. Lageranordnung nach einem der obigen Ansprüche, wobei die Außenlaufbahnen unterschiedliche Druckwinkel aufweisen.

6. Lageranordnung nach einem der obigen Ansprüche, wobei wenigstens zwisehen zwei der einzelnen Laufbahnelemente (5a, 5b) Distanzelemente (17) angeordnet sind.

7. Lageranordnung nach Anspruch 5, wobei wenigstens zwei der einzelnen Laufbahnelemente (305a, 305b) axial nicht beabstandet sind.

8. Lageranordnung nach einem der obigen Ansprüche, wobei die Wälzkörper der bezüglich der axialen Richtung innen liegenden Reihen kleiner ausgeführt sind als die Wälzkörper der außen liegenden Reihen.

9. Lageranordnung nach einem der obigen Ansprüche, wobei die Wälzkörper derart ausgebildet sind, dass der die Wälzkörper einhüllende größte Kreis der in axialer Richtung bezüglich der axialen Mitte der Lageranordnung innen liegenden Reihen kleiner ausgeführt ist als der die Wälzkörper einhüllende kleinste Kreis der außen liegenden Reihen.

10. Getriebe zum Einsatz in einer Windkraftanlage, aufweisend wenigstens eine Lageranordnung nach einem der Ansprüche 1 bis 9.

11. Getriebe nach Anspruch 10, wobei das gemeinsame Laufbahnelement eine den Laufbahnen gegenüberliegende Verzahnung aufweist.

## Claims

1. Bearing arrangement, having the following features:
- raceway elements (5a, 5b, 3) with raceways (13a, 13b, 9a, 9b), on which rolling bodies (7a, 7b) roll,
- frustoconical rolling bodies (7a, 7b) which are arranged between the raceway elements (5a, 5b, 3),
- the rolling bodies (7a, 7b) are arranged in at least four rows which are spaced apart axially,
- the rolling bodies (7a, 7b) of each row roll on a single raceway element (5a, 5b), and
- the rolling bodies (7a, 7b) of all rows roll on a common raceway element (3),
**characterized in that** the common raceway element (3) is arranged so as to lie radially on the outside and is configured as an outer ring, and the individual raceway elements (5a, 5b) are arranged so as to lie radially on the inside and are configured as inner rings.

2. Bearing arrangement according to Claim 1, the common raceway element (3) having four raceways (9a, 9b) which are spaced apart axially.

3. Bearing arrangement according to Claim 1, in each case two rows of the rolling bodies (107a, 107b) rolling on a common raceway (109) of the common raceway element (103).

4. Bearing arrangement according to one of Claims 1, 2 and 3, the rows of the rolling bodies having at least two different cone angles, and the raceways of the raceway elements having corresponding raceway angles.

5. Bearing arrangement according to one of the above claims, the outer raceways having different contact angles.

6. Bearing arrangement according to one of the above claims, spacer elements (17) being arranged at least between two of the individual raceway elements (5a, 5b).

7. Bearing arrangement according to Claim 5, at least two of the individual raceway elements (305a, 305b) not being spaced apart axially.

8. Bearing arrangement according to one of the above claims, the rolling bodies of the rows which lie on the inside with regard to the axial direction being of smaller configuration than the rolling bodies of the rows which lie on the outside.

9. Bearing arrangement according to one of the above claims, the rolling bodies being configured in such a way that the largest circle, enveloping the rolling bodies, of the rows which lie on the inside in the axial direction with regard to the axial centre of the bearing arrangement is of smaller configuration than the smallest circle, enveloping the rolling bodies, of the rows which lie on the outside.

10. Gearbox for use in a wind power plant, having at least one bearing arrangement according to one of Claims 1 to 9.

11. Gearbox according to Claim 10, the common raceway element having a toothing system which lies opposite the raceways.

## Revendications

1. Agencement palier, présentant les caractéristiques suivantes :
- des éléments de chemin de roulement (5a, 5b, 3) avec des chemins de roulement (13a, 13b, 9a, 9b), sur lesquels roulent des corps de roulement (7a, 7b),
- des corps de roulement de forme tronconique (7a, 7b) qui sont disposés entre les éléments de chemin de roulement (5a, 5b, 3),
- les corps de roulement (7a, 7b) sont disposés dans au moins quatre rangées espacées axialement,
- les corps de roulement (7a, 7b) de chaque rangée roulent sur un élément de chemin de roulement individuel (5a, 5b) et
- les corps de roulement (7a, 7b) de toutes les rangées roulent sur un élément de chemin de roulement commun (3),
**caractérisé en ce que** l'élément de chemin de roulement commun (3) est disposé de manière située radialement à l'extérieur et est réalisé sous forme de bague extérieure et les éléments de chemin de roulement individuels (5a, 5b) sont disposés de manière située radialement à l'intérieur et sont réalisés sous forme de bague interne.

2. Agencement palier selon la revendication 1, dans lequel l'élément de chemin de roulement commun (3) présente quatre chemins de roulement espacés axialement (9a, 9b).

3. Agencement palier selon la revendication 1, dans lequel deux rangées des corps de roulement (107a, 107b) roulent à chaque fois sur un chemin de roulement commun (109) de l'élément de chemin de roulement commun (103).

4. Agencement palier selon l'une quelconque des revendications 1, 2 ou 3, dans lequel les rangées des corps de roulement présentent au moins deux angles de conicité différents et les chemins de roulement des éléments de chemin de roulement présentent des angles de chemin de roulement correspondants.

5. Agencement palier selon l'une quelconque des revendications précédentes, dans lequel les chemins de roulement extérieurs présentent des angles de pression différents.

6. Agencement palier selon l'une quelconque des revendications précédentes, dans lequel au moins entre deux des éléments de chemin de roulement individuels (5a, 5b) sont disposés des éléments d'espacement (17).

7. Agencement palier selon la revendication 5, dans lequel au moins deux des éléments de chemin de roulement individuels (305a, 305b) ne sont pas espacés axialement.

8. Agencement palier selon l'une quelconque des revendications précédentes, dans lequel les corps de roulement des rangées situées à l'intérieur par rapport à la direction axiale sont réalisés de manière plus petite que les corps de roulement des rangées situées à l'extérieur.

9. Agencement palier selon l'une quelconque des revendications précédentes, dans lequel les corps de roulement sont réalisés de telle sorte que le plus grand cercle enveloppant les corps de roulement des rangées situées à l'intérieur dans la direction axiale par rapport au centre axial de l'agencement palier est réalisé de manière plus petite que le cercle le plus petit enveloppant les corps de roulement des rangées situées à l'extérieur.

10. Transmission pour l'utilisation dans une éolienne, présentant au moins un agencement palier selon l'une quelconque des revendications 1 à 9.

11. Transmission selon la revendication 10, dans laquelle l'élément de chemin de roulement commun présente une denture opposée au chemin de roulement.
